# EUROPEAN PATENT SPECIFICATION

(11) **EP 2 550 550 B1**
(45) Date of publication and mention of the grant of the patent: **15.01.2020**
(21) Application number: 10759939.1
(22) Date of filing: 07.06.2010
(51) Int. Cl.: G01V 1/22

(54) **SENSOR ARRAY**
SENSORANORDNUNG
RÉSEAU DE CAPTEURS

(30) Priority: 22.03.2010 GB 201004753
(43) Date of publication of application: 30.01.2013
(73) Proprietor: Stingray Geophysical Hong Kong Limited, Central (HK)
(72) Inventor: NASH, Philip, Surbiton Surrey KT6 6AP (GB); AUSTIN, Edward, Surbiton Surrey KT6 6AP (GB); FELLS, Julian, Surbiton Surrey KT6 6AP (GB)
(74) Representative: Gill Jennings & Every LLP
(86) International application number: PCT/GB2010/001125
(87) International publication number: WO 2011/117561

(56) References cited:
- EP-A2- 2 081 053
- GB-A- 2 391 124
- US-A1- 2005 184 260
- US-A1- 2008 123 467

## Description

This invention relates to sensor arrays, and especially to sensor arrays that are located in environments in which the sensor array is difficult to access. The invention is particularly suitable for undersea seismic sensor arrays although it will be appreciated that the invention may be employed with sensors of other types.

Undersea seismic sensor arrays are widely used in the exploration of and monitoring of oil and gas reservoirs beneath the seabed. In these seismic monitoring techniques, an array of accelerometers and/or hydrophones are deployed as sensor packages on the seabed and are used to detect reflected seismic waves, and the results are analysed to provide information relating to the nature and state of geological structures beneath the seabed, and to the presence of oil or gas within these structures.

UA-A-2005/184260, EP-A-2 081 053 A2, US-A-2008/123467 and GB-A-2 391 124 all disclose sensor arrangements for monitoring a reservoir, wherein optical signals are injected into a sensor array and are modulated by the sensor array, and the modulated signals are demodulated and recorded at a receiver unit.

Seismic sensor arrays based on fibre-optic sensors offer particular benefit for these applications. Typically a large number of sensors, for example 16,000 or more, are arranged along a number of optical cables that are spaced apart from one another to form a two-dimensional array that extends over a large area for example an area of 100 square kilometres or more. In one form of arrangement which may be referred to as a "4C" sensor unit, three seismic vibration sensors are arranged in orthogonal directions together with one hydrophone to form an optical sensing unit (OSU), and a number of optical sensing units are located along an optical line at spaced apart intervals, for example in the range of from 20 to 100 metres. A number of lines, for example 30 although more or fewer may be employed, may extend from a hub located on the seabed in a direction generally parallel to one another and spaced apart from one another, for example by from 100 to 500 metres, to form the array. The hub may be connected by an optical cable to an interrogator located on an exploration or production platform that monitors the sensors by optical reflectometry. In operation, the interrogator sends an optical pulse along the cable where it is split at the hub before being sent along the individual lines to the optical sensor units. The vibration sensors may comprise a length of optical fibre that is wound around a flexible former to form a coil, and the optical lines may contain reflectors, for example formed by a mirror that terminates a fibre coupled with the line, preferably upstream and downstream of the sensors. As the external pressure varies, the coil of fibre is compressed or released, thereby changing the length of fibre in the coil. If a signal is sent along the optical fibre, it is partially reflected back along the line at each of the mirrors so that the signal, for example a phase shift in the signal that is dependent on the distance between the reflectors, is affected by any seismic activity. In this way, any mechanical impulse caused by an air gun or other explosion in the vicinity of the array, may be detected by observing the response of the sensor array to the optical pulse generated by the interrogator. Such a form of optical cable is disclosed in UK patent application No. 2,339,941 filed on 8 June 2007.

The signals that are sent along the optical lines will normally be multiplexed in view of the large number of sensor units, usually both time division multiplexed and wavelength division multiplexed.

The interrogator of the system thus typically comprises a transmitter having a number of lasers, e.g. 16, for forming the optical signals, and optical switches, and a receiver for receiving and processing the reflected optical signals. The receiver will need to demultiplex a number of wavelength and time division multiplexed streams arriving from the various optical lines of the sensor array, convert the optical signals to electrical signals, digitise them and transmit them onwards or store them.

The major benefit of optical systems is that no underwater electronics is required, increasing the reliability of the underwater part of the system and decreasing cost and complexity. However, this means that all the electronics required to operate the system is concentrated in the interrogator unit (unlike in an electrical seismic sensor array, where the electronics is distributed throughout the seabed array). The interrogator of the system will therefore generally have a significant degree of complexity, for example a complexity that causes it to occupy a number of electronics cabinets, with a volume typically of 3 cubic metres, and require a sizable power supply, for example one of up to 12 kW. This size and power requirement may cause a problem, especially for smaller platforms, where available space and power are limited, and in some cases, especially where the array is located in deep water, no local platform may be present, and all operations will need to be conducted from the seabed. In such a case, repair and maintenance of the interrogator represents a considerable problem.

According to one aspect, the present invention provides a sensor arrangement for monitoring a reservoir as defined in claim 1. According to another aspect, the invention provides a method of monitoring a reservoir as defined in claim 12.

Although one could, in theory, extend the uplink between the transmitter and the array quite easily because it need contain only a single optical fibre and so only a single amplifier every 30 km or so, the advantage of doing so is limited since the transmitter is relatively simple as stated above, and could be located on the seabed in the region of the array if necessary. It is the receiver unit, and in particular the demodulator of the receiver unit, that is complex and consumes a significant quantity of power, and which is impractical to be located underwater or on a small platform. These arrangements thus have the disadvantage that it is the downlink from the array to the receiver unit that is relatively long and may need a number of amplifier stages. Since it is the downlink that contains a large number of optical fibres running in parallel with one another the total number of amplifiers can still be relatively large.

This disadvantage may be overcome according to the invention in that the receiver unit is divided between a proximal part that is in the region of the array, and a remote part that may be located onshore or on a platform and which can receive the optical signals from the proximal part via a relatively long optical line that requires amplification. If the proximal part contains the receiver, an A/D converter for digitizing the optical signals from the receiver, and a communications unit for sending the digital signals from the A/D converter to the demodulator, and the remote part contains the demodulator and any recorder, only signals from the communications unit to the remote part of the receiver need be amplified. These signals may be sent as a single digitally multiplexed data stream along relatively few optical fibres, possibly only a single optical fibre, so that the number of amplifiers can be reduced.

Several embodiments of the present invention will now be described by way of example with reference to the accompanying drawings, in which:
Figure 1 is a schematic view of a seismic sensor array deployed on a seabed in a manner similar to that of the present invention;
Figure 2 is a schematic representation of one seismic sensor unit that may be employed in the array according to the invention;
Figure 3 is a schematic plan view of a seismic sensor array that is not part of the present invention showing the arrangement of sensor units;
Figure 4 is a schematic plan view of the sensor array of figure 3 showing the interrogator in more detail;
Figure 5 is a schematic and simplified view of a tree topology of an uplink optical cable employed in the arrangement according to the invention;
Figure 6 is a schematic and simplified view of an alternative form of uplink optical cable;
Figure 7 is a schematic view of another form of arrangement that is not part of the invention in which the interrogator is divided between different locations; and
Figure 8 is a schematic view of yet another form of arrangement according to the invention in which the receiver part of the interrogator is split between two locations.

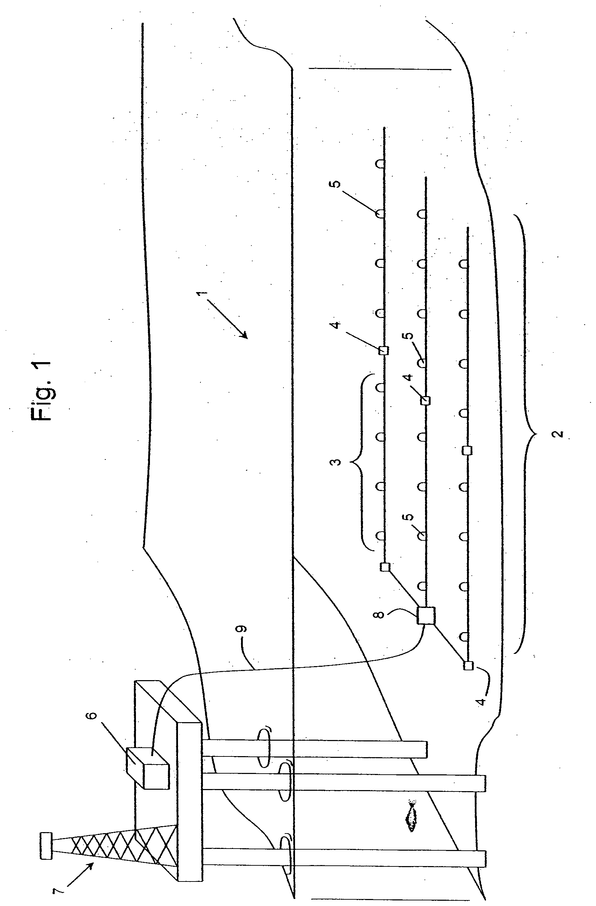

Referring to Figure 1, there is seen a marine oil platform 7, supported on legs from the seabed. A seismic sensor array 1 as described in GB 2 449 941 is deployed on the seabed in order to detect changes in the underlying reservoir. The seismic sensor array comprises a plurality of seismic cables 2 each of which may be formed from a number of modules 3 that are joined by joint elements 4 and contain a number of sensor units 5 that are spaced apart along the cables. The connecting cables for the seismic cables 2 lead to a hub 8 formed where all of the seismic cables 2 are joined to a riser cable 9 that extends from the hub 8 to an operating system 6 on the platform 7. Signals are generated by a transmitter in the operating system or interrogator 6 and sent to the sensor units 5, and returns are received from the sensor units 5 at the operating system 6, where the signal returns are analysed in order to determine the nature of the structures beneath the seabed. Although the sensor array 1 has been shown on the seabed adjacent to the platform 7, this is simply for the sake of clarity. As mentioned below, the array may be a considerable distance from the platform, for example in the order of 100 km or more.

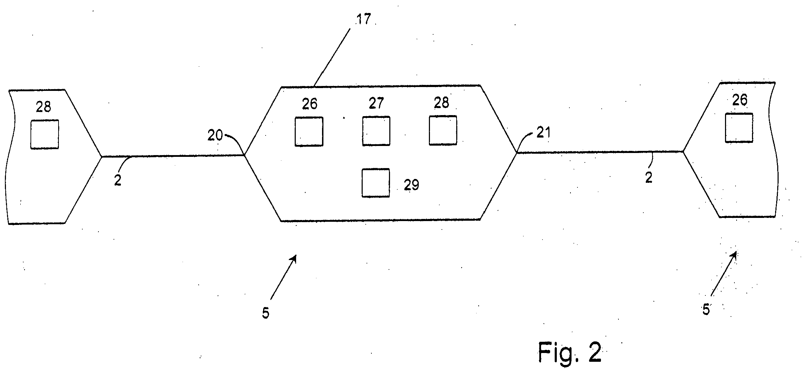

A sensor unit 5 that may be employed in the sensor array is schematically illustrated in Figure 2. Each sensor unit typically comprises a housing 17 which has a cable entry point 20 and a cable exit point 21.

Within the housing 17 there are contained three seismic sensors 26, 27 and 28 arranged in orthogonal directions and a hydrophone 29. Such sensor units comprising three orthogonal seismic sensors and a hydrophone may be referred to as an optical sensing unit (OSU). The cable entry point 20 and the cable exit point 21 are connected to the respective entry and exit points of adjacent OSUs to form a chain of OSUs The seismic sensors 26, 27 and 28 and hydrophone 29 are fibre optic devices, and the connection cable 2 will comprise a number of optical fibres for connecting the sensors of each sensor unit to its neighbours in the chain. In one embodiment, a continuous length of cable 2 may connect all of the sensor units in a deployment device. The cable may have a number of optical fibre pairs running along its length, and at each sensor unit a pair of fibres may be drawn out of the cable and connected to the sensors of that sensor unit.

Each optical sensing unit (OSU) will require four channels (one for each seismic sensor and one for the hydrophone) and may be deployed in groups of four, which require 16 optical channels per group. This may conveniently be achieved by time division multiplexing, in which the input optical signal is pulsed and returning optical pulses from different sensors are distinguished by time of flight. Additional multiplexing that is required in order to interrogate all the optical sensing units is achieved by means of wavelength division multiplexing, in which pulses of typically 16 different wavelengths are sent into the system and each wavelength is routed to a separate set of time multiplexed sensors using commonly known wavelength selective components. The received signals are therefore sent from the optical sensing units to the receiver as a number of time division multiplexed and wavelength division multiplexed streams. The optical signal from each sensor contains the data from that sensor encoded as a phase modulation. Typically, the receiver may receive in the order of 30 different TDM/WDM streams corresponding to 480 channels. An implementation of this architecture is described in European Patent no. EP 1 169 619 B1

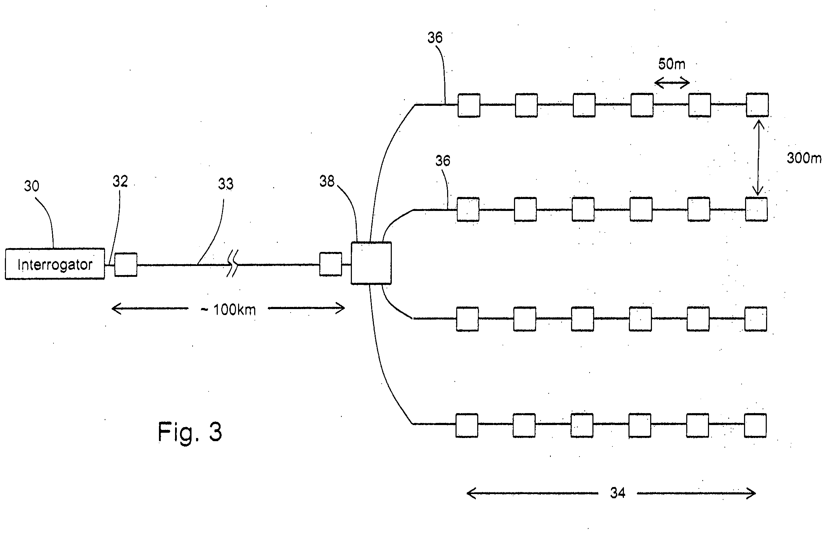

Figure 3 is a schematic simplified view of an analogue sensor arrangement that is not part of the present invention showing the general arrangement of sensor units in the sensor array.

The arrangement generally comprises an interrogator 30 comprising an optical transmitter, receiver, demodulator and recorder described in more detail below, which may be located at a convenient location, for example on shore or on an oil platform, so that the various components can be in the dry and are easily located for modification or repair. A riser cable 32 may extend down to the seabed and then an optical cable 33 forming both the uplink and the downlink optical fibres may extend for 30 to 100 km or more to a sensor array 34 of OSUs. The sensor array comprises a number of sensor lines 36, typically in the order of 30, although more or fewer may be present, that extend from a seabed hub 38 substantially parallel to one another with a spacing of approximately 300 metres between them. Each sensing line has a number of 4-C optical sensing units spaced apart from one another and extending along the length of the line. Typically there will be 64 OSUs in each line separated from one another by approximately 50 metres. Typically also there will be 30 to 100 parallel sensor lines 36 in the array so that such an array will contain approximately 6000 OSUs.

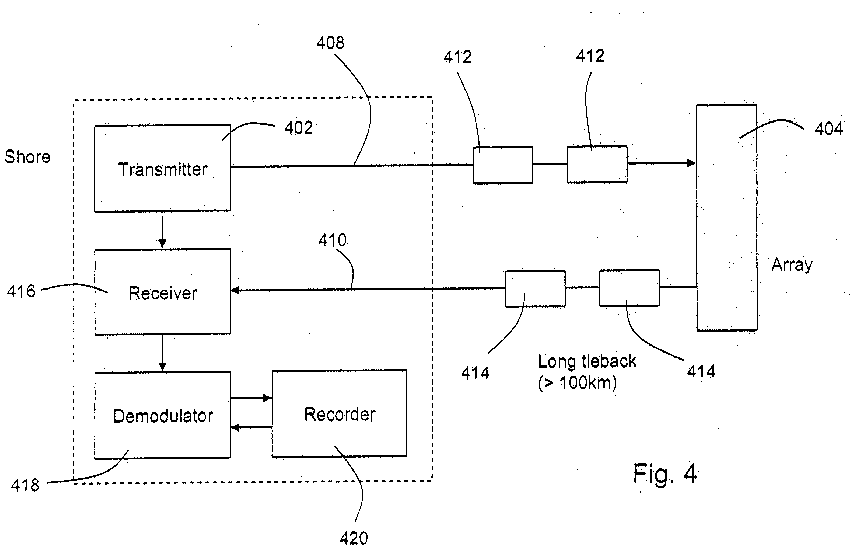

Figure 4 is a schematic view of the array of figure 3 showing the interrogator and uplink and downlink cables rather than the arrangement of the array. According to this example, the entire interrogator, which comprises a transmitter 402 for sending optical pulses to the array 404 along an uplink optical cable 408, and a receiver unit 416 for receiving the signals from the array via a downlink optical cable 410 is located at the same site, for example on a platform that is not associated with the relevant reservoir but is associated with a different reservoir or field, or more usually, on a shore based installation. In this arrangement, the uplink and downlink optical cables will typically have a length of at least 50, more usually at least 100 km, in which case one or more amplifiers 412 will be required to amplify the uplink optical signals and one or more amplifier 414 required to amplify the downlink optical signals. The uplink or downlink optical cables extending between the transmitter or the receiver and the array may be referred to herein as a "long tieback". It is possible to employ regenerators to amplify the signal, in which the optical signal is converted to an electrical signal, amplified, and then converted back to an optical signal, although it is preferred to employ optical amplifiers in which the optical signals are directly amplified with no conversion to electrical signals. The analogue signals in the downlink optical cable are then passed to a receiver unit comprising an optical receiver 416 that passes electrical signals derived therefrom to a demodulator 418 and thence to a recorder 420. The demodulator converts the phase modulated signal from each sensor into a demodulated digitised signal which is a direct representation of the signal acting on the sensor e.g. a seismic signal. The demodulation process can be any standard phase demodulation process e.g. heterodyne demodulation or phase generated carrier demodulation

The amplifier is preferably a doped fibre amplifier for example an erbium doped fibre amplifier in which an erbium doped fibre can be pumped by a laser at a wavelength of 980 nm or 1480 nm. The uplink and/or downlink cables may contain electrical conductors for transmitting electrical power to the amplifier(s), or a remote optically pumped amplifier may be employed in which a pumping signal is input to the pump fibre at a convenient location, for example on shore or on a platform, and the optical cable pump fibre extends along the long tieback (the uplink or downlink optical cable).

The spacing of the amplifiers, and the total length of the link, will be determined by a number of factors. The amplifiers compensate for the optical attenuation in the datalink (which is typically of the order of 0.25 dB/km). However, the number of amplifiers will be limited by the build-up of additional noise produced by the amplifiers, and by the introduction of non-linear optical effects. These effects include four wave mixing, Raman scattering and Brillouin scattering. The magnitude of these effects will depend on the launched optical power, and the exact type of optical fibre used, and can be modelled using well-recognised optical system modelling techniques developed for telecommunications applications, though these need to be modified for the different requirements of seismic sensing arrays (which include higher optical pulse power but less frequent optical pulses). If remote pumped amplifiers are used, the attenuation of the 980 nm or 1480 nm pump signal is also a factor in determining the number and spacing of amplifiers.

It is also possible to use distributed optical amplification. In this case no discrete amplifiers are included in the downlink or uplink, but the normal signal fibres in the uplink or downlink are optically pumped (in either direction) by an additional pump wavelength (produced by a pump laser, for instance on shore at the top of the uplink) to produce a low level of distributed amplification of the optical signals in the fibre, which reduces effective attenuation along the length of the signal fibres. One method of producing such distributed optical amplification is Raman amplification.

In many operational cases, existing fibre communication links will have been previously laid between the shore and the platform, utilising a number of optical fibres and standard digital optical telecommunication technology. Where such cables exist, it would be possible to utilise these for operation of the optical sensing arrays, either by utilising unused (spare) optical fibres within the existing datalink cable, or by utilising the same optical fibres used for digital telecommunications, but transmitting the signals corresponding to the sensor arrays at different wavelengths than the existing digital telecommunication signals.

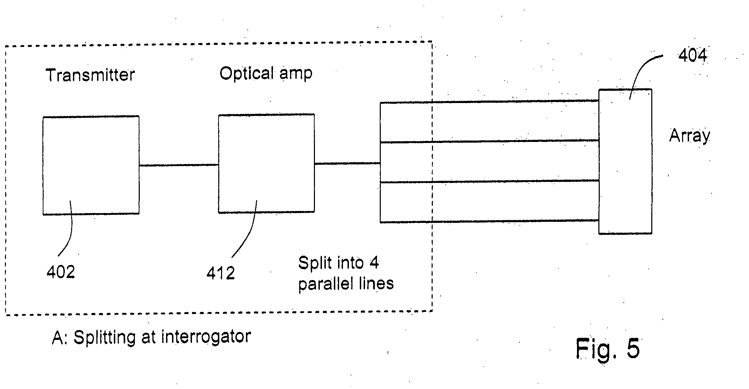

In the seismic sensor arrangements the optical topology requires an equal number of outward and return (uplink and downlink) optical fibres at the sensor units. For example, for a 6000 OSU system, 100 output fibres would be required (for 64 OSUs in each line of the array that is supplied by one optical fibre, this will give 6400 OSUs). These are generated by means of a "tree" topology as shown in figure 5. This shows a simplified example using only one stage of amplification and splitting into four optical fibres, but in practice there may be more stages of amplification and/or splitting producing typically 20 to 50, e.g. 30 output optical fibres. The amplifier 412 is preferably located immediately upstream of the point at which the optical cable is split into parallel optical fibres that provide, and extend along, the uplink optical cable 408 to the array 404. The point at which the fibres are split into parallel lines may correspond to the hub 38 of the sensor array, or the optical fibres forming the long tieback may be physically separated from one another by the hub 38 at a position different from the position at which the optical fibre is separated. Figure 5 shows one arrangement in which the optical pulses are amplified and the optical fibres forming the uplink optical cable are split at the interrogator, and the optical cable so formed then extends with one or more intermediate amplifying stages to the sensor array where the groups of optical fibres in the cable are separated from one another at the hub 38 into physically separate lines. Such a form of arrangement is not preferred, however, in view of the large number of amplifiers required and the significant electrical power requirement. For example, two optical fibres are required for every 64 OSUs (the number in each line 36), so that a full size array of 6000 OSUs would require up to 200 fibres in the long tieback, and 100 to 200 amplifiers at each repeater point.

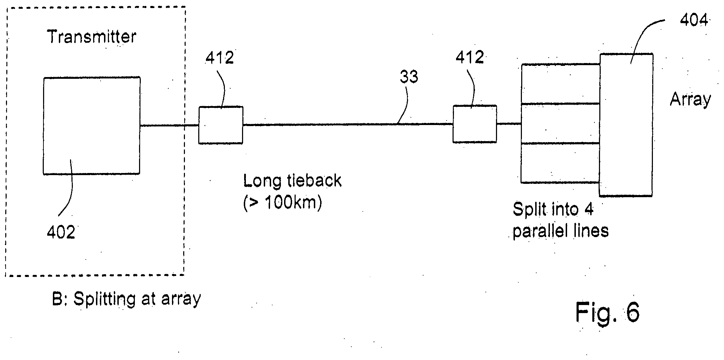

Figure 6 shows a preferred arrangement according to the invention in which an optical cable 33 comprising a single optical fibre in the uplink optical cable or a relatively low number of optical fibres extends between the transmitter and the sensor array 404 along which cable the pulses are amplified one or more times over the length of the long tieback, in the order of 100 km or more, by means of amplifiers 412. In the region of the array, for example at the hub, an amplifier is provided and the optical fibre forming the cable is then split into a number of separate lines (four as shown, but the number may be greater or smaller). Such a form of sensor array has the advantage that only a single amplifier need be provided at each amplification point in the uplink.

In the arrangement as shown in figure 6, only a single optical fibre is required in order to send the pulses from the transmitter to the array before it is split into a number of fibres for the return (downlink), so that the total number of optical fibres requiring the provision of amplifiers extending between the interrogator and the sensor array is effectively halved as compared with the arrangement as shown in figure 5.

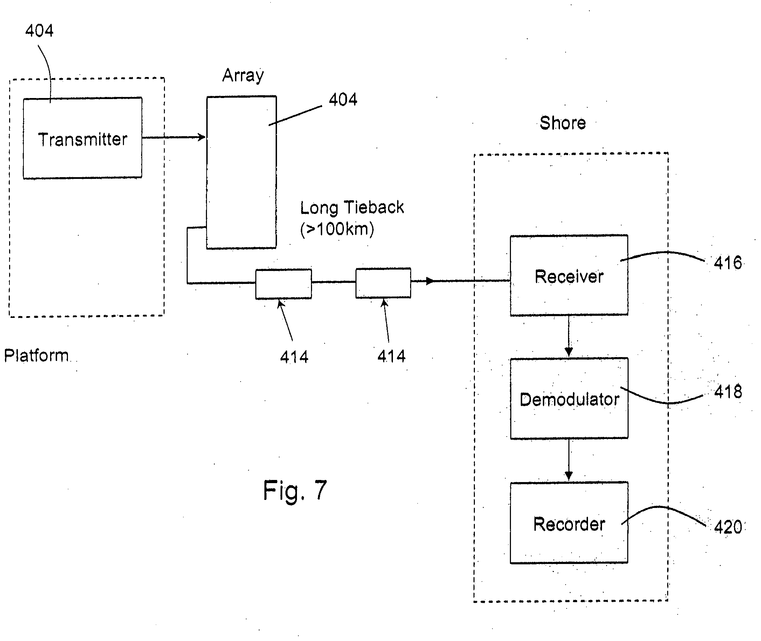

Figure 7 shows another example not part of the present invention in which the interrogator is divided into two separate parts. One part of the interrogator, which contains the pulse transmitter 402, may be located in the region of the array, especially sufficiently close to the array not to require amplification or only to require a single stage of amplification typically provided at the output of the transmitter, or at the hub where the optical cable is split into a number of separate optical lines 36 of the array. In this arrangement, the downlink optical cable which carries the return signals and extends between the sensor array and the receiver unit may extend over a large distance in the region of 100 km or more and may have one or more stages of amplification 414 in order to enable the receiver unit to be located at a convenient place, for example on a neighbouring platform or on a shore-based installation.

It is normal in this example to provide a location in the region of the array for the transmitter, that is to say, sufficiently close to the array that no optical amplifier is necessary between the transmitter and the array other than any amplifier at the output of the transmitter and/or immediately upstream of the hub. This may be on a neighbouring platform or even on the seabed if no platform is available, but this is not a significant disadvantage since the transmitter unit will generally comprise only lasers, optical switching and one stage of amplification, and will be relatively compact, simple and low cost with a high degree of reliability, so that it is not burdensome for the transmitter to be located underwater or on a platform where space is limited. Timing signals will need to be sent between the transmitter 402 and the receiver 416, but this can be achieved by sensing optical control signals through the optical cable forming the downlink between the sensor array 404 and the receiver unit 416. These timing signals will be required to synchronise the transmit optical pulses and the received pulses. In one embodiment, the transmitter and receiver will each generate their own local timing, but the two will be synchronised by a single optical pulse transmitted at regular intervals between the transmitter and receiver (in either direction). In another embodiment, the master system timing is generated either at the transmitter or the receiver, and more detailed information about the system timing is transmitted using one or more digitally encoded optical pulses to the other part of the system. The digital encoding is carried out by one of a number of well-known data encoding techniques such as phase-shift keying. In this case, either the transmitter acts as the master and the receiver acts as the slave, or the receiver acts as the master and the transmitter acts as the slave.

This form of arrangement has the advantage that the number of optical fibre lines, or at least the number of optical fibre lines requiring amplification, is effectively halved as compared with the embodiment shown in figure 5. In addition, since the uplink optical cable between the transmitter and the array is relatively short, the length of the downlink (datalink) optical cable can effectively be doubled as compared with the embodiment shown in figure 5 without sacrificing signal quality.

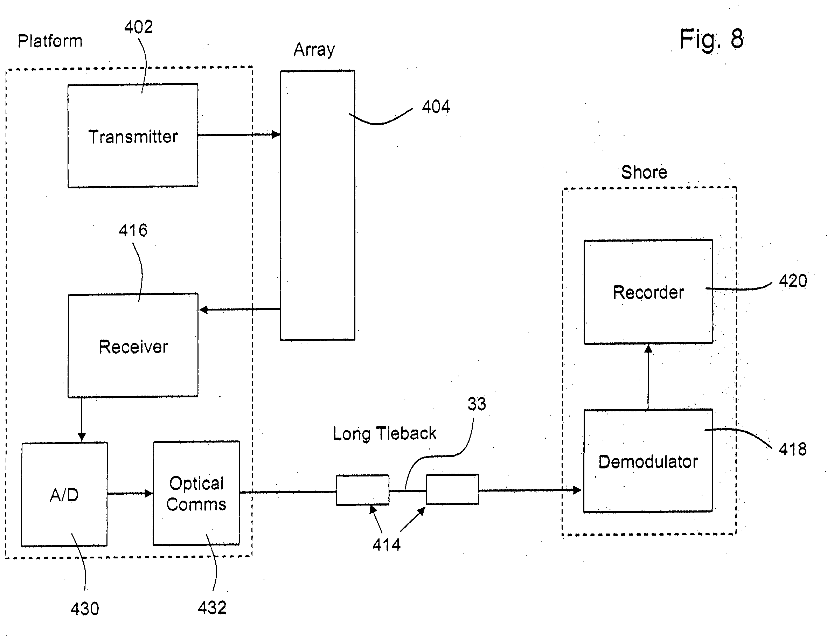

Figure 8 shows yet another embodiment of the invention in which not only is the interrogator divided between the transmitter unit and the receiver unit as shown in figure 7, but the receiver unit itself is divided into two parts: a receiver 416 that may be located relatively close to the sensor array 404, that is to say for example sufficiently close to the sensor array not to require amplification of the signals from the sensor array, and a demodulator 418 and recorder 420 that receive data from the receiver 416 and which are located remotely (for example in the order of 100 km or more) from the receiver, for example on a shore-based installation or on a remote platform. In such an arrangement signals sent from the receiver to the demodulator may need to be amplified by one or more amplification stages 414. In this embodiment, the receiver includes a plurality of optical detectors, which are typically photodiodes (one for each wavelength of the wavelength multiplexed signal (i.e. one for each group of four OSUs)), and the signals from the receiver are sent to an A/D converter 430 for each photodiode in the receiver, an electronic multiplexer for combining the digital outputs from the A/D converter(s), and a communications module 432 for packetising the multiplexed digitised signals and sending them along a transmission channel to the demodulator 418 as a single digitised data stream, using techniques well known in digital data communications. The communications module may be operative to send the data from the receiver to the demodulator by any appropriate means, for example by means of a satellite or microwave link, although it will normally be operative to send the data to the demodulator by means of a cable, especially an optical cable. In this case a relatively small number of optical fibres may be used in the long tieback cable, preferably only a single fibre.

For a typical array, the receiver will receive 30 time division and wavelength division multiplexed data streams (multiplexed at 16 wavelengths) which are converted to 480 TDM data streams, each of which is converted into an electrical signal using a separate photodiode. The electrical data streams are digitised to generate 480 time domain multiplexed phase modulated outputs. In a typical heterodyne modulated system, each channel will have a heterodyne carrier frequency of 50 kHz and will be sampled at a sampling frequency of 200 kHz, although many other configurations of phase modulated data are possible. It will be necessary to multiplex the data at a rate sufficiently high to ensure the full bandwidth of the modulated data has been captured, to allow accurate demodulation of the data..

This embodiment has the disadvantage that it requires a somewhat more complex local interrogator as compared with the embodiments described in figures 5 to 9, but the equipment that is required to be close to the array, namely the transmitter, receiver and communications module, is relatively simple and of low power requirement compared with that of the demodulator, normally occupying only a single nineteen inch rack. The equipment that is the most complex requiring a large amount of space and power, for example three cubic metres in volume and a 10 kW power consumption, is the demodulator, which can be located at a convenient place in a shore-based installation. Also, the reliability of the equipment on the platform is likely to be significantly greater than that of the shore-based equipment (due to its lesser complexity), so repair would be required less often (which has significant cost and operational benefits). The embodiment has the further advantage that the number of optical fibres required to send the data along the long distance from the sensor array to the demodulator is significantly reduced as compared with the embodiments shown in figures 5 to 9, preferably to a single optical fibre, thereby reducing the number of amplifiers and reducing the size of the optical cable required. The data transmission to shore can take place over an existing communications link, using the same optical fibres as are normally used by the platform to communicate with shore. In principle the array data could be included within the same data transmission as is normally used for other data from the platform to shore, though in practice the data rate required for the sensor system will be significantly higher than would be conventionally used, so this data would most likely be transmitted using a different transmission scheme and at a different optical wavelength, but over the same fibre datalink.

## Claims

1. A sensor arrangement for monitoring a reservoir, which comprises:
a sensor array (1, 404) comprising a plurality of sensor units (5) located over an area to be monitored;
an interrogator (6, 30) for obtaining data on the reservoir from the sensor units, which comprises:
a. a transmitter (402) for sending optical signals to the sensor array (1);
b. a receiver unit (416) for receiving modulated optical signals from the array in response to the transmitted optical signals;
an uplink optical cable (408) for transmitting the optical signals from the transmitter (402) to the sensor array (1); and
a downlink optical cable (410) for transmitting the modulated optical signals from the sensor array (1) to the receiver unit (416);
at least one of the uplink optical cable (408) and the downlink optical cable (410) having an optical amplifier (412, 414) for amplification of the transmitted optical signals and/or amplification of the modulated optical signals;
**characterised in that** the sensor arrangement further comprises:
an optical line (33), and wherein
the receiver unit (416) is divided into two parts, and comprises:
a first part that includes:
a receiver (416) for receiving modulated optical signals from the array (404) in response to the transmitted optical signals;
an A/D converter (430) for digitizing the modulated optical signals from the sensor array (1); and
an optical transmitter (432) for transmitting the digitalized modulated optical signals; and
a second part that includes:
a demodulator (418) for demodulating the
received digitalized modulated optical signals; and
a recorder (420) for recording the
demodulated signals;
and wherein the digital modulated optical signals are sent along the optical line (33) that extends at least 100 km from the optical transmitter (432) of the first part to the demodulator (418) of the second part.

2. A sensor arrangement as claimed in claim 1, wherein the optical line includes at least one optical amplifier (412, 414).

3. A sensor arrangement as claimed in claim 1 or claim 2, wherein the optical line (33) comprises only a single optical fibre.

4. A sensor arrangement as claimed in any one of claims 1 to 3, wherein the demodulator (418) and recorder (420) are located onshore.

5. A sensor arrangement as claimed in any one of claims 1 to 4, wherein the receiver (416), A/D converter (430) and the communications unit (432) are located on a platform (7).

6. A sensor arrangement as claimed in any preceding claim, wherein the optical pulses are transmitted to the optical sensor units (5) via the downlink optical cable (410) without amplification.

7. A sensor arrangement as claimed in any preceding claim, wherein the uplink optical cable (408) extends through a hub (8) where it divides into a plurality of lines (2) that are spaced apart from one another and to which the sensor units (5) are connected so that the lines extend over the area to be monitored.

8. A sensor arrangement as claimed in claim 7, which includes an optical amplifier upstream of the hub and in the region of the hub.

9. A sensor arrangement as claimed in claim 7 or claim 8, wherein the optical pulses are transmitted from the hub to the sensor units (5) without amplification.

10. A sensor arrangement as claimed in any one of claims 6 to 9, wherein the uplink optical cable (408) has only a single optical fibre between the transmitter (402) and the hub (8).

11. A sensor arrangement as claimed in any one of claims 1 to 10, wherein any optical amplifier is a distributed optical amplifier in which the signal optical fibres are arranged to be optically pumped by an additional pump wavelength produced by a laser.

12. A method of monitoring a reservoir, which comprises:
sending a plurality of optical signals from a transmitter (402) along an uplink optical cable (408) to a sensor array (1) which comprises a plurality of sensor units (5) located over an area to be monitored;
receiving modulated optical signals in response to the transmitted optical signals, via a downlink optical cable (410), from the sensor array (1) at a receiver unit (416), wherein the receiver unit (416) is divided into two parts, and comprises:
a first part that includes:
a receiver (416) for receiving modulated optical signals from the array in response to the transmitted optical signals;
an A/D converter (430) for digitizing the modulated optical signals from the sensor array (1); and
an optical transmitter (432) for transmitting the digitalized modulated optical signals; and
a second part that includes:
a demodulator (418) for demodulating the received modulated optical signals; and
a recorder (420) for recording the demodulated signals;
and wherein the method further comprises the steps of:
receiving, at the receiver, modulated optical signals from the array in response to the transmitted optical signals;
digitizing, in the A/D converter (430), the received modulated optical signals;
transmitting the digitalized modulated optical signals by the optical transmitter (432) along an optical line (33) that extends at least 100 km to the remote demodulator (418) of the second part of the receiver;
receiving the transmitted digitized modulated signals at the remote demodulator (418);
demodulating the received digital signals using the demodulator (418); and
recording the demodulated signals.

13. A method according to claim 12, wherein the transmitted digitized signals are amplified during transmission from the communications unit (432) to the demodulator (418).

## Patentansprüche

1. Sensoranordnung zum Überwachen eines Reservoirs, umfassend:
ein Sensorfeld (1, 404), mehrere Sensoreinheiten (5) umfassend, die über einem zu überwachenden Gebiet angeordnet sind;
eine Abfrageeinrichtung (6, 30) zum Gewinnen von Daten über das Reservoir von den Sensoreinheiten, die Folgendes umfasst:
a. einen Sender (402) zum Senden optischer Signale an das Sensorfeld (1);
b. eine Empfängereinheit (416) zum Empfangen modulierter optischer Signale von dem Feld als Reaktion auf die übertragenen optischen Signale;
ein optisches Uplink-Kabel (408) zum Übertragen der optischen Signale von dem Sender (402) an das Sensorfeld (1); und
ein optisches Downlink-Kabel (410) zum Übertragen der modulierten optischen Signale von dem Sensorfeld (1) an die Empfängereinheit (416);
wobei zumindest eines aus dem optischen Uplink-Kabel (408) und/oder dem optischen Downlink-Kabel (410) einen optischen Verstärker (412, 414) zur Verstärkung der übertragenen optischen Signale und/oder zur Verstärkung der modulierten optischen Signale aufweist;
**dadurch gekennzeichnet, dass** die Sensoranordnung ferner Folgendes umfasst:
eine optische Leitung (33), wobei die Empfängereinheit (416) in zwei Teile unterteilt ist und Folgendes umfasst:
einen ersten Teil, der Folgendes aufweist:
einen Empfänger (416) zum Empfangen modulierter optischer Signale von dem Feld (404) als Reaktion auf die übertragenen optischen Signale;
einen A/D-Wandler (430) zum Digitalisieren der modulierten optischen Signale von dem Sensorfeld (1); und
einen optischen Sender (432) zum Übertragen der digitalisierten modulierten optischen Signale; und
einen zweiten Teil, der Folgendes aufweist:
einen Demodulator (418) zum Demodulieren der empfangenen digitalisierten modulierten optischen Signale; und
eine Aufzeichnungsvorrichtung (420) zum Aufzeichnen der demodulierten Signale;
wobei die digitalen modulierten optischen Signale entlang der optischen Leitung (33) gesendet werden, die sich mindestens über 100 km vom optischen Sender (432) des ersten Teils zum Demodulator (418) des zweiten Teils erstreckt.

2. Sensoranordnung nach Anspruch 1, wobei die optische Leitung mindestens einen optischen Verstärker (412, 414) aufweist.

3. Sensoranordnung nach Anspruch 1 oder Anspruch 2, wobei die optische Leitung (33) nur eine einzige optische Faser umfasst.

4. Sensoranordnung nach einem der Ansprüche 1 bis 3, wobei sich der Demodulator (418) und die Aufzeichnungsvorrichtung (420) auf dem Festland befinden.

5. Sensoranordnung nach einem der Ansprüche 1 bis 4, wobei sich der Empfänger (416), der A/D-Wandler (430) und die Kommunikationseinheit (432) auf einer Plattform (7) befinden.

6. Sensoranordnung nach einem der vorhergehenden Ansprüchen, wobei die optischen Impulse ohne Verstärkung über das optische Downlink-Kabel (410) an die optischen Sensoreinheiten (5) übertragen werden.

7. Sensoranordnung nach einem der vorhergehenden Ansprüche, wobei das optische Uplink-Kabel (408) durch einen Hub (8) geführt ist, in dem es sich in mehrere Leitungen (2) aufteilt, die voneinander beabstandet sind und mit denen die Sensoreinheiten (5) verbunden sind, sodass die Leitungen über das zu überwachende Gebiet verlaufen.

8. Sensoranordnung nach Anspruch 7, die dem Hub vorgeschaltet und im Bereich des Hubs einen optischen Verstärker aufweist.

9. Sensoranordnung nach Anspruch 7 oder 8, wobei die optischen Impulse ohne Verstärkung von dem Hub zu den Sensoreinheiten (5) übertragen werden.

10. Sensoranordnung nach einem der Ansprüche 6 bis 9, wobei das optische Uplink-Kabel (408) nur eine einzige optische Faser zwischen dem Sender (402) und dem Hub (8) aufweist.

11. Sensoranordnung nach einem der Ansprüche 1 bis 10, wobei ein optischer Verstärker ein verteilter optischer Verstärker ist, in dem die optischen Signalfasern so angeordnet sind, dass sie durch eine zusätzliche Pumpwellenlänge, die von einem Laser erzeugt wird, optisch gepumpt werden.

12. Verfahren zum Überwachen eines Reservoirs, umfassend:
Senden mehrerer optischer Signalen von einem Sender (402) entlang eines optischen Uplink-Kabels (408) an ein Sensorfeld (1), das mehrere Sensoreinheiten (5) umfasst, die über einem zu überwachenden Gebiet angeordnet sind;
als Reaktion auf die übertragenen optischen Signale Empfangen modulierter optischer Signale über ein optisches Downlink-Kabel (410) von dem Sensorfeld (1) an einer Empfängereinheit (416), wobei die Empfängereinheit (416) in zwei Teile geteilt ist und Folgendes umfasst:
einen ersten Teil, der Folgendes aufweist:
einen Empfänger (416) zum Empfangen modulierter optischer Signale von dem Feld als Reaktion auf die übertragenen optischen Signale;
einen A/D-Wandler (430) zum Digitalisieren der modulierten optischen Signale von dem Sensorfeld (1); und
einen optischen Sender (432) zum Übertragen der digitalisierten modulierten optischen Signale; und
einen zweiten Teil, der Folgendes aufweist:
einen Demodulator (418) zum Demodulieren der empfangenen modulierten optischen Signale; und
eine Aufzeichnungsvorrichtung (420) zum Aufzeichnen der demodulierten Signale;
wobei das Verfahren ferner die folgenden Schritte umfasst:
an dem Empfänger Empfangen von modulierten optischen Signalen von dem Feld als Reaktion auf die übertragenen optischen Signale;
Digitalisieren der empfangenen modulierten optischen Signale in dem A/D-Wandler (430);
Übertragen der digitalisierten modulierten optischen Signale durch den optischen Sender (432) entlang der optischen Leitung (33), die sich mindestens über 100 km zum entfernten Demodulator (418) des zweiten Teils des Empfängers erstreckt;
Empfangen der übertragenen digitalisierten modulierten Signale am entfernten Demodulator (418);
Demodulieren der empfangenen digitalen Signale unter Verwendung des Demodulators (418); und
Aufzeichnen der demodulierten Signale.

13. Verfahren nach Anspruch 12, wobei die übertragenen digitalisierten Signale während der Übertragung von der Kommunikationseinheit (432) an den Demodulator (418) verstärkt werden.

## Revendications

1. Agencement de capteurs destiné à la surveillance d'un réservoir, qui comprend :
un réseau de capteurs (1, 404) comprenant une pluralité d'unités de capteur (5) situées sur une zone à surveiller ;
un interrogateur (6, 30) permettant d'obtenir des données sur le réservoir à partir des unités de capteur, qui comprend :
a. un émetteur (402) permettant d'envoyer des signaux optiques au réseau de capteurs (1) ;
b. une unité de réception (416) permettant de recevoir des signaux optiques modulés provenant du réseau en réponse aux signaux optiques transmis ;
un câble optique de liaison montante (408) permettant de transmettre les signaux optiques de l'émetteur (402) au réseau de capteurs (1) ; et
un câble optique de liaison descendante (410) permettant de transmettre les signaux optiques modulés du réseau de capteurs (1) à l'unité de réception (416) ;
au moins l'un parmi le câble optique de liaison montante (408) et le câble optique de liaison descendante (410) ayant un amplificateur optique (412, 414) pour l'amplification des signaux optiques transmis et/ou l'amplification des signaux optiques modulés ;
**caractérisé en ce que** l'agencement de capteurs comprend en outre :
une ligne optique (33), et l'unité réceptrice (416) étant divisée en deux parties, et comprenant :
une première partie qui comprend :
un récepteur (416) permettant de recevoir des signaux optiques modulés du réseau (404) en réponse aux signaux optiques transmis ;
un convertisseur A/N (430) permettant de numériser les signaux optiques modulés provenant du réseau de capteurs (1) ; et
un émetteur optique (432) permettant de transmettre les signaux optiques modulés numérisés ; et
une deuxième partie qui comprend :
un démodulateur (418) permettant de démoduler les signaux optiques modulés numérisés reçus ; et
un enregistreur (420) permettant d'enregistrer les signaux démodulés ; et
les signaux optiques modulés numériques étant envoyés le long de la ligne optique (33) s'étendant sur au moins 100 km de l'émetteur optique (432) de la première partie jusqu'au démodulateur (418) de la deuxième partie.

2. Agencement de capteurs selon la revendication 1, dans lequel la ligne optique comporte au moins un amplificateur optique (412, 414).

3. Agencement de capteurs selon la revendication 1 ou la revendication 2, dans lequel la ligne optique (33) comprend une seule fibre optique.

4. Agencement de capteurs selon l'une quelconque des revendications 1 à 3, dans lequel le démodulateur (418) et l'enregistreur (420) sont situés à terre.

5. Agencement de capteurs selon l'une quelconque des revendications 1 à 4, dans lequel le récepteur (416), le convertisseur A/N (430) et l'unité de communication (432) sont situés sur une plate-forme (7).

6. Agencement de capteurs selon l'une quelconque des revendications précédentes, dans lequel les impulsions optiques sont transmises aux unités de détection optique (5) par l'intermédiaire du câble optique de liaison descendante (410) sans amplification.

7. Agencement de capteurs selon l'une quelconque des revendications précédentes, dans lequel le câble optique de liaison montante (408) traverse un concentrateur (8) où il se divise en une pluralité de lignes (2) espacées les unes des autres et auxquelles les unités de capteur (5) sont connectées de sorte que les lignes s'étendent sur la zone à surveiller.

8. Agencement de capteurs selon la revendication 7, qui comprend un amplificateur optique en amont de la plaque tournante et dans la région du moyeu.

9. Agencement de capteurs selon la revendication 7 ou la revendication 8, dans lequel les impulsions optiques sont transmises du moyeu vers les unités de capteur (5) sans amplification.

10. Agencement de capteurs selon l'une quelconque des revendications 6 à 9, dans lequel le câble optique de liaison montante (408) ne dispose que d'une seule fibre optique entre l'émetteur (402) et le moyeu (8).

11. Agencement de capteurs selon l'une quelconque des revendications 1 à 10, dans lequel tout amplificateur optique est un amplificateur optique distribué dans lequel les fibres optiques de signal sont agencées pour être pompées optiquement par une longueur d'onde de pompage supplémentaire produite par un laser.

12. Procédé de surveillance d'un réservoir, qui consiste à :
envoyer une pluralité de signaux optiques d'un émetteur (402) le long d'un câble optique de liaison montante (408) à un réseau de capteurs (1) qui comprend une pluralité d'unités de capteur (5) situées sur une zone à surveiller ;
recevoir des signaux optiques modulés en réponse aux signaux optiques transmis, via un câble optique de liaison descendante (410), du réseau de capteurs (1) au niveau d'une unité de réception (416), l'unité de réception (416) étant divisée en deux parties, et comprenant :
une première partie qui comprend :
un récepteur (416) permettant de recevoir des signaux optiques modulés provenant de la matrice en réponse aux signaux optiques transmis ;
un convertisseur A/N (430) permettant de numériser les signaux optiques modulés provenant du réseau de capteurs (1) ; et
un émetteur optique (432) permettant de transmettre les signaux optiques modulés numérisés ; et
une deuxième partie qui comprend :
un démodulateur (418) permettant de démoduler les signaux optiques modulés reçus ; et
un enregistreur (420) permettant d'enregistrer les signaux démodulés ; et
le procédé comprenant en outre les étapes consistant à :
recevoir, au niveau du récepteur, des signaux optiques modulés provenant de la matrice en réponse aux signaux optiques transmis ;
numériser, dans le convertisseur A/N (430), les signaux optiques modulés reçus ;
transmettre les signaux optiques modulés numérisés par l'émetteur optique (432) le long d'une ligne optique (33) s'étendant sur au moins 100 km jusqu'au démodulateur distant (418) de la seconde partie du récepteur ;
recevoir les signaux modulés numérisés transmis au niveau du démodulateur distant (418) ;
démoduler les signaux numériques reçus à l'aide du démodulateur (418) ; et à enregistrer les signaux démodulés.

13. Procédé selon la revendication 12, dans lequel les signaux numérisés transmis sont amplifiés lors de la transmission de l'unité de communication (432) vers le démodulateur (418).
